# EUROPÄISCHE PATENTSCHRIFT

(11) **EP 3 206 869 B1**
(45) Veröffentlichungstag und Bekanntmachung des Hinweises auf die Patenterteilung: **05.12.2018**
(21) Anmeldenummer: 15763224.1
(22) Anmeldetag: 27.08.2015
(51) Int. Cl.: B32B 15/08, B32B 15/18, B32B 15/20, B32B 27/18, B32B 27/20, G10K 11/168, F16F 1/40

(54) **KÖRPERSCHALLDÄMPFENDER VERBUNDWERKSTOFF**
SOUND ABSORBING COMPOSITE
MATÉRIAU COMPOSITE ABSORBANT LES SONS

(30) Priorität: 14.10.2014 DE 102014014976
(43) Veröffentlichungstag der Anmeldung: 23.08.2017
(73) Patentinhaber: ThyssenKrupp Steel Europe AG, 47166 Duisburg (DE); thyssenkrupp AG, 45143 Essen (DE)
(72) Erfinder: KLAUKE, Peter, 58239 Schwerte (DE)
(74) Vertreter: thyssenkrupp Intellectual Property GmbH
(86) Internationale Anmeldenummer: PCT/EP2015/069609
(87) Internationale Veröffentlichungsnummer: WO 2016/058740

(56) Entgegenhaltungen:
- EP-A2- 0 167 455
- GB-A- 2 143 533
- US-A- 6 008 462
- US-A1- 2006 062 977
- US-A1- 2006 134 449
- US-A1- 2010 040 902

## Beschreibung

Die Erfindung betrifft einen körperschalldämpfenden Verbundwerkstoff umfassend mindestens zwei metallische Lagen und mindestens eine zwischen den metallischen Lagen angeordneten Polymerschicht, wobei die Polymerschicht mindestens einen Schweißzusatz enthält, wobei die Polymerschicht eine Dicke von 0,01 bis 0,2 mm aufweist.

Gattungsgemäße Verbundwerkstoffe sind aus dem Stand der Technik bekannt. Der von der Anmelderin unter dem Handelsnamen Bondal® vertriebene körperschalldämpfende Verbundwerkstoff besteht aus zwei Stahldeckblechen und einer dazwischen angeordneten Polymerschicht, wobei die Polymerschicht aus beispielsweise einem Acrylat-, Silikon-, Polyamid und/oder Polyethylen, Polyesterwerkstoff oder einem Epoxidharz bestehen kann. Ein Verbinden des körperschalldämpfenden Verbundwerkstoffes mit anderen Bauteilen beispielsweise durch Schweißen, insbesondere Widerstandsschweißen stellt in der Regel kein Problem dar. Zur Verbesserung der elektrischen Leitfähigkeit und Einstellung der Widerstandsschweißeignung eines Verbundwerkstoffs werden, wie in der USamerikanischen Veröffentlichungsschrift 2009/0142538 offenbart, der Polymerschicht Schweißzusätze zugegeben. Die Nachteile der Schweißzusätze sind vielfältig. Schweißzusätze mit einem hohen spezifischen Gewicht im Vergleich zum Kunststoff zeigen im flüssigen bzw. schmelzflüssigen Polymer ein sehr ungünstiges Absetzverhalten, sodass eine gleichmäßige und homogene Verteilung der Pigmente im Polymer sowohl während der Verarbeitung als auch am fertigen Produkt nicht immer ausreichend sichergestellt werden kann. Weiterhin kann bei einigen Schweißzusätzen eine nachteilige chemische Reaktion mit dem Polymer nicht immer ausgeschlossen werden, welche sich sowohl negativ auf die Konsistenz des flüssigen bzw. schmelzflüssigen Polymers als auch auf die Schäl- und Scherwirkung des Kunststoffes bzw. auf dessen Haftung im Verbund auswirken kann. Ferner können auch einige Schweißzusätze die Verlustfaktorkurve über einen breiten Temperaturbereich von 50 bis 500 Hz negativ beeinflussen. Bei einigen untersuchten Pigmenten (Al-Flakes, FeAl 50/50, FeSi45, Zn-Pulver, FeSiAl, Fe3P-Pulver) bzw. Pigmentmischungen aus den vorgenannten Produkten wurden aufgrund ihrer spezifischen Widerstände enge Schweißbereiche in der Größenordnung insbesondere Δ I < 500 Ampere festgestellt oder ließen sich überhaupt nicht schweißen.

Aus der GB 2 143 533 A ist eine schweißbare, wärmevernetzende Dichtmasse mit einer Viskosität von mindestens 6 Millionen Centipoises, in welcher Eisenpartikel zur Verbesserung der Schweißeigenschaften der Dichtmasse dispergiert sind, und ihre Verwendung zum Schweißen von Metallstücken bekannt.

Hiervon ausgehend ist es Aufgabe der vorliegenden Erfindung, einen körperschalldämpfenden Verbundwerkstoff vorzuschlagen, welcher die vorgenannten Nachteile im Stand der Technik überwindet.

Die aufgezeigte Aufgabe für einen gattungsgemäßen Verbundwerkstoff wird dadurch gelöst, dass die Kunststoffschicht Eisenschwamm als Schweißzusatz in einer Menge von 0,1 bis 30,0 Gew.-% enthält.

Untersuchungen haben gezeigt, dass überraschend Eisenschwamm, welcher beispielsweise unter dem Produktnamen *"MH300"* der Fa. Höganäs bekannt ist, als Schweißzusatz allen gestellten Anforderungen gerecht wird. Eisenschwamm kann pulver-, pigment- und/oder granulatförmig dem Polymer zugegeben werden, wobei der mittlere Durchmesser des Schweißzusatzes im Wesentlichen kleiner 0,2 mm, insbesondere kleiner 0,1 mm, vorzugsweise kleiner 0,05 mm ist, und ermöglicht durch sein geringes spezifisches Gewicht von ca. 2,85 g/cm³ eine vorteilhafte und vereinfachte Verarbeitung, insbesondere kann ein unerwünschtes Absetzverhalten bzw. eine Entmischung, insbesondere nach Zugabe des Schweißzusatzes in den Behältnissen, in welchen ein flüssiges Polymer, insbesondere ein flüssiges und lösemittelhaltiges Polymer gelagert wird, im Wesentlichen verhindert werden. Um eine elektrische Leitfähigkeit durch die Kunststoffschicht und ein positives Schweißergebnis sicherzustellen, enthält die Polymerschicht mindestens 0,1 Gew.-%, insbesondere mindestens 0,5 Gew.-%, vorzugsweise mindestens 1,0 Gew.-% Eisenschwamm. Um nicht die mechanischen Eigenschaften, insbesondere die Haftung zwischen den metallischen Lagen und den Verlustfaktor des Polymers negativ zu beeinflussen, ist die Menge auf maximal 30,0 Gew.-%, insbesondere auf maximal 20,0 Gew.-%, vorzugsweise auf maximal 15,0 Gew.-% Eisenschwamm begrenzt. Durch die Verwendung von Eisenschwamm als Schweißzusatz können größere Schweißbereiche, insbesondere Δ I > 600 Ampere, insbesondere Δ I > 800 Ampere, vorzugsweise Δ I > 1000 Ampere eingestellt werden. Darüber hinaus lässt sich sowohl die Breite des Schweißbereichs als auch die Lage des Schweißbereichs über den spezifischen Widerstand durch verschiedene Arten einer nachträglichen metallischen und/oder nichtmetallischen anorganischen Beschichtung des Eisenschwamms wie beispielsweise einer chemischen Phosphatierung, Chromatierung oder Vernickelung, einer galvanischen Metallabscheidung oder aber mittels CVD- oder PVD-Verfahren weiter optimieren. Je nach Anforderung kann Eisenschwamm unbeschichtet, beschichtet oder in Kombination verwendet werden. Zudem entstehen beim Widerstandsschweißen keine gesundheitsschädigenden Schweißdämpfe und der erfindungsgemäße Verbundwerkstoff hat im Vergleich zu einem Verbundwerkstoff ohne Schweißzusätze keinen nachteiligen Einfluss auf die Haftung des Verbundes wie beispielsweise den Schäl- und Scherwerten. Erfindungsgemäße Verbundwerkstoffe vor allem jene mit körperschalldämpfenden Eigenschaften können für Konstruktionen in allen Bereichen, in denen Verbindungen durch Widerstands- bzw. Widerstandspunktschweißen hergestellt werden, bereitgestellt werden, wie insbesondere eine widerstandsgeschweißte Konstruktion, die mindestens einen erfindungsgemäßen körperschalldämpfenden Verbundwerkstoff und mindestens ein weiteres Bauteil umfasst.

Eine weitere Ausgestaltung der Erfindung sieht vor, dass die metallischen Lagen aus einem Stahlwerkstoff gebildet sind. Unbeschichtete oder metallisch beschichtete, insbesondere verzinkte Stahlwerkstoffe, beispielsweise verzinkte Tiefziehstähle sind relativ kostengünstig und eignen sich daher hervorragend für Konstruktionen vorzugsweise im Fahrzeugbau, die einen kathodischen Korrosionsschutz benötigen. Auch Leichtmetallwerkstoffe wie Aluminium- und Magnesiumwerkstoffe können als metallische Lagen verwendet werden, sofern zusätzlich Gewicht am Verbundwerkstoff eingespart werden soll. Auch unterschiedliche Werkstoffkombinationen der oben genannten Metalle sind möglich. Die metallischen Lagen weisen eine Dicke von 0,1 bis 3,0 mm, insbesondere von 0,15 bis 2,0 mm, vorzugsweise von 0,2 bis 1,5 mm und besonders bevorzugt von 0,3 bis 1,2 mm auf.
In Kombination mit der Polymerschicht, die eine Dicke von 0,01 bis 0,2 mm, insbesondere 0,02 bis 0,1 mm und bevorzugt 0,025 bis 0,05 mm aufweist, wird erfindungsgemäß ein körperschalldämpfender Verbundwerkstoff bereitgestellt. Die Polymerschicht kann in Form einer Folie, insbesondere einer extrudierten Folie, vorzugsweise einer extrudierten Klebefolie mit homogen dispergiertem Eisenschwamm zwischen den metallischen Lagen eingebracht und anschließend auf die metallischen Lagen kaschiert werden. Darüber hinaus ist auch eine Direktextrusion des schmelzflüssigen mit Eisenschwamm angereicherten Polymers auf eine metallische Lage möglich. Alternativ kann das Polymer-/die Polymerschicht mit homogen dispergiertem Eisenschwamm zumindest auf eine metallische Lage flüssig, vorzugsweise im Coil-Coating Verfahren (Bandbeschichtung) appliziert und anschließend bei entsprechend hohen Temperaturen im Durchlaufofen vernetzt werden.

Zur Verbesserung der akustischen Eigenschaften wie auch beispielsweise des Scherwerts kann die Polymerschicht zusätzliche Füllstoffe enthalten. Als Füllstoffe können insbesondere organische Fasern, beispielsweise Naturfasern (beispielsweise Baumwollfasern), Regeneratfasern (beispielsweise Cellulosefasern) und/oder synthetische Chemiefasern (beispielsweise Glasfasern) verwendet werden. Die Faserlänge beträgt bevorzugt 0,01 bis 0,2 mm, wobei ein Schlankheitsverhältnis (Verhältnis: Faserlänge zu Faserdurchmesser) kleiner als 5 besonders bevorzugt vorgesehen ist. Die Polymerschicht kann mindestens 0,1 Gew.-% Füllstoff, insbesondere mindestens 0,5 Gew.-% Füllstoff, vorzugsweise mindestens 1,0 Gew.-% Füllstoff bzw. besonders bevorzugt 1,5 Gew.-% Füllstoff enthalten, wobei der Füllstoff auf maximal 25,0 Gew.-%, insbesondere auf maximal 20,0 Gew.-%, vorzugsweise auf maximal 15,0 Gew.-% bzw. besonders bevorzugt auf maximal 10,0 Gew.-% begrenzt ist, um nicht die vorteilhaften Eigenschaften zu beeinträchtigen.

In der einfachsten Ausführungsform besteht der erfindungsgemäße Verbundwerkstoff aus zwei metallischen Lagen (Decklagen) und einer zwischen den Decklagen angeordneten Polymerschicht, die Eisenschwamm enthält. Die Zahl der jeweiligen Lagen kann bei Bedarf durchaus erhöht werden, so dass auch ein beispielsweise fünflagiger Verbundwerkstoff bereitgestellt werden kann, der aus drei metallischen Lagen und jeweils einer zwischen den metallischen Lagen angeordneten Polymerschicht, die jeweils Eisenschwamm enthält, besteht.

## Patentansprüche

1. Körperschalldämpfender Verbundwerkstoff umfassend mindestens zwei metallische Lagen und mindestens eine zwischen den metallischen Lagen angeordneten Polymerschicht, wobei die Polymerschicht mindestens einen Schweißzusatz enthält, wobei die Polymerschicht eine Dicke von 0,01 bis 0,2 mm aufweist,
**dadurch gekennzeichnet, dass**
die Polymerschicht Eisenschwamm als Schweißzusatz in einer Menge von 0,1 bis 30,0 Gew.-% enthält.

2. Körperschalldämpfender Verbundwerkstoff nach Anspruch 1,
**dadurch gekennzeichnet, dass**
die Polymerschicht Eisenschwamm mit mindestens 1,0 und maximal 15,0 Gew.-% enthält.

3. Körperschalldämpfender Verbundwerkstoff nach einem der Ansprüche 1 oder 2,
**dadurch gekennzeichnet,**
**dass** der Eisenschwamm metallisch und/oder nichtmetallisch anorganisch beschichtet ist.

4. Körperschalldämpfender Verbundwerkstoff nach einem der vorgenannten Ansprüche,
**dadurch gekennzeichnet, dass**
die metallischen Lagen aus einem Stahlwerkstoff, Aluminiumwerkstoff und/oder Magnesiumwerkstoff oder deren Werkstoffkombinationen gebildet sind.

5. Körperschalldämpfender Verbundwerkstoff nach einem der vorgenannten Ansprüche,
**dadurch gekennzeichnet, dass**
die metallischen Lagen eine Dicke von 0,1 bis 3,0 mm, insbesondere von 0,15 bis 2,0 mm, vorzugsweise von 0,2 bis 1,5 mm und besonders bevorzugt von 0,3 bis 1,2 mm aufweisen.

6. Körperschalldämpfender Verbundwerkstoff nach einem der vorgenannten Ansprüche,
**dadurch gekennzeichnet, dass**
die Polymerschicht eine Dicke von 0,02 bis 0,1 mm, bevorzugt 0,025 bis 0,05 mm aufweist.

7. Körperschalldämpfender Verbundwerkstoff nach einem der vorgenannten Ansprüche,
**dadurch gekennzeichnet, dass** die Polymerschicht Füllstoffe in einer Menge von 0,1 bis 25,0 Gew.-%, insbesondere von 0,5 bis 20,0 Gew.-%, vorzugsweise 1,0 bis 15,0 Gew.-%, besonders bevorzugt von 1,5 bis 10,0 Gew.-% enthält.

8. Widerstandsgeschweißte Konstruktion, insbesondere im Fahrzeugbau mit mindestens einem körperschalldämpfenden Verbundwerkstoff nach einem der Ansprüche 1 bis 6 und mindestens einem weiteren Bauteil.

## Claims

1. Composite material having structure-borne sound insulation properties and comprising at least two metallic plies and at least one polymer layer disposed between the metallic plies, where the polymer layer contains at least one welding filler material, where the polymer layer has a thickness of 0.01 to 0.2 mm, **characterized in that** the polymer layer contains iron sponge as welding filler material in an amount of 0.1% to 30.0% by weight.

2. Composite material having structure-borne sound insulation properties according to Claim 1, **characterized in that** the polymer layer contains at least 1.0% and at most 15.0% by weight of iron sponge.

3. Composite material having structure-borne sound insulation properties according to either of Claims 1 and 2, **characterized in that** the iron sponge has metallic and/or nonmetallic inorganic coating.

4. Composite material having structure-borne sound insulation properties according to any of the preceding claims, **characterized in that** the metallic plies have been formed from a steel material, aluminium material and/or magnesium material or material combinations thereof.

5. Composite material having structure-borne sound insulation properties according to any of the preceding claims, **characterized in that** the metallic plies have a thickness of 0.1 to 3.0 mm, especially of 0.15 to 2.0 mm, preferably of 0.2 to 1.5 mm and more preferably of 0.3 to 1.2 mm.

6. Composite material having structure-borne sound insulation properties according to any of the preceding claims, **characterized in that** the polymer layer has a thickness of 0.02 to 0.1 mm, preferably 0.025 to 0.05 mm.

7. Composite material having structure-borne sound insulation properties according to any of the preceding claims, **characterized in that** the polymer layer contains fillers in an amount of 0.1% to 25.0% by weight, especially of 0.5% to 20.0% by weight, preferably 1.0% to 15.0% by weight, more preferably of 1.5% to 10.0% by weight.

8. Resistance-welded construction, especially in motor vehicle manufacturing, having at least one composite material having structure-borne sound insulation properties according to any of Claims 1 to 6 and at least one further component.

## Revendications

1. Matériau composite pour l'isolation des bruits de structure, comprenant au moins deux couches métalliques et au moins une couche polymère agencée entre les couches métalliques, la couche polymère contenant au moins un additif de soudage, la couche polymère présentant une épaisseur de 0,01 à 0,2 mm, **caractérisé en ce que** la couche polymère contient une éponge de fer en tant qu'additif de soudage en une quantité de 0,1 à 30,0 % en poids.

2. Matériau composite pour l'isolation des bruits de structure selon la revendication 1, **caractérisé en ce que** la couche polymère contient une éponge de fer à hauteur d'au moins 1,0 et d'au plus 15,0 % en poids.

3. Matériau composite pour l'isolation des bruits de structure selon l'une quelconque des revendications 1 ou 2, **caractérisé en ce que** l'éponge de fer est revêtue inorganiquement métalliquement et/ou non métalliquement.

4. Matériau composite pour l'isolation des bruits de structure selon l'une quelconque des revendications précédentes, **caractérisé en ce que** les couches métalliques sont formées par un matériau à base d'acier, un matériau à base d'aluminium et/ou un matériau à base de magnésium ou leurs combinaisons de matériau.

5. Matériau composite pour l'isolation des bruits de structure selon l'une quelconque des revendications précédentes, **caractérisé en ce que** les couches métalliques présentent une épaisseur de 0,1 à 3,0 mm, notamment de 0,15 à 2,0 mm, de préférence de 0,2 à 1,5 mm et de manière particulièrement préférée de 0,3 à 1,2 mm.

6. Matériau composite pour l'isolation des bruits de structure selon l'une quelconque des revendications précédentes, **caractérisé en ce que** la couche polymère présente une épaisseur de 0,02 à 0,1 mm, de préférence de 0,025 à 0,05 mm.

7. Matériau composite pour l'isolation des bruits de structure selon l'une quelconque des revendications précédentes, **caractérisé en ce que** la couche polymère contient des charges en une quantité de 0,1 à 25,0% en poids, notamment de 0,5 à 20,0 % en poids, de préférence de 1,0 à 15,0 % en poids, de manière particulièrement préférée de 1,5 à 10,0 % en poids.

8. Construction soudée par résistance, notamment dans la construction de véhicules, comprenant au moins un matériau composite pour l'isolation des bruits de structure selon l'une quelconque des revendications 1 à 6 et au moins un autre composant.
